**Europäisches Patentamt**

**European Patent Office**

**Office européen des brevets**

(11) Publication number : **0 142 960 B2**

# (12) NEW EUROPEAN PATENT SPECIFICATION

(45) Date of publication of the new patent specification : **26.08.92 Bulletin 92/35**

(51) Int. Cl.⁵ : **F16B 19/10**

(21) Application number : **84307639.9**

(22) Date of filing : **06.11.84**

(54) Blind-riveting assembly.

(30) Priority : **15.11.83 DE 3341408**

(43) Date of publication of application :
**29.05.85 Bulletin 85/22**

(45) Publication of the grant of the patent :
**20.07.88 Bulletin 88/29**

(45) Mention of the opposition decision :
**26.08.92 Bulletin 92/35**

(84) Designated Contracting States :
**DE FR GB IT SE**

(56) References cited :
**CH-A- 567 665**
**DE-A- 2 360 159**
**DE-A- 2 907 475**
**DE-A- 2 949 109**
**DE-A- 3 320 403**
**DE-U- 7 421 660**
**DE-U- 7 934 377**
**US-A- 2 183 543**
**US-A- 2 538 623**

(73) Proprietor : **TUCKER FASTENERS LIMITED**
**Walsall Road**
**Birmingham B42 1BP (GB)**
(84) **GB**
Proprietor : **EMHART INDUSTRIES, INC.**
**426 Colt Highway**
**Farmington Connecticut 06032 (US)**
(84) **FR IT SE**
Proprietor : **TUCKER GMBH**
**Max-Eyth-Strasse1 Postfach 111329**
**W-6300 Giessen (DE)**
(84) **DE**

(72) Inventor : **Mauer, Dieter**
**Ostendstrasse 10**
**W-6304 Lollar (DE)**
Inventor : **Renner, Wolf**
**Ernst-Eckstein-Strasse 5**
**W-6300 Giessen (DE)**

(74) Representative : **Wetters, Basil David Peter et al**
**Emhart Patents Department Lyn House 39 The Parade**
**Oadby, Leicester LE2 5BB (GB)**

EP 0 142 960 B2

## Description

This invention concerns a metal blind-riveting assembly as defined in the preamble of Claim 1.

A blind-riveting assembly of the aforementioned type (but without the neck in the mandrel stem), and its production method, are known from US-A-2317360 with priority from the year 1940. In making the assembly there described the two upset ends of the mandrel are cylindrical, or substantially so, which, with their greater diameters, are shouldered in relation to the part of the stem lying between them. The terminal end of each of the two heads remote from the mandrel stem is defined by a flat radial surface normal to the axis of the mandrel. The head used as the pulling head of the mandrel also meets the mandrel stem at an annular face normal to the maldrel axis, while the head forming the rivet-setting head is conical at its underside where it joins the mandrel stem and forms an angle of about 45° with the mandrel axis. The cone is intended to widen the body portion of the rivet when the rivet is being set (see US-A-2183543 with priority from the year 1937 and US-A-2538623 with priority from 1945). The pulling head of the mandrel is thus rectangular, or substantially so, in axial section, while at the opposite end of the mandrel, there is a corresponding profile but with the exception that here the transition into the mandrel stem is conically formed.

With the method described in those specifications for producing the pulling head of the mandrel, with its substantially rectangular profile, a considerable amount of pressure is necessary in order to make the material of the blank concerned yield to form this profile shape, and the reaction to this pressure is taken at least in part by an abutmelt engaging the other end of the mandrel. Thus, in the course of this heading operation the predetermined breaking point or neck of the mandrel, where the cross section of the mandrel stem is reduced, as shown in Figures 8 and 9 of US-A-2183543 and in Figures 1 and 3 of US-A-2538623, is subject to a considerable load. If the neck is one in which there is a reduction of about 30% in the cross section as known and commonly used in the art, then there is a risk that the parts of the mandrel meeting at the neck will shift against each other in such a way, in the event of a particularly high pressure in the upsetting process, that they will no longer lie axially aligned if the mandrel is not tightly enclosed at either side of the neck by a tool which prevents any lateral yielding of the parts of the mandrel at these localities. Over and above this, high axial pressures exerted on the neck may lead to such a compressive strain on it that its predetermined breaking force changes, which would deprive the blind-riveting assembly in question of its required properties and under certain circumstances would even prevent proper execution of the rivet-setting process.

The properties described above, on the part of the known blind-riveting assembly with a mandrel upset at both ends essentially like flat-topped cylinders, no doubt contributed to the situation whereby such a blind-riveting assembly has not become widely established in practice. The blind-riveting assembly predominantly used in practice (and as shown in Figure 3 of GB-A-673757) consists of a smooth continuous nail-like mandrel with a predetermined breaking point or neck inside the rivet sleeve and a rivet-setting head which is generally conical or hemispherical in axial section terminating at a flat annular base, and no pulling head.

The idea of a pulling head on the mandrel for engagement by the setting tool was not rejected, however, as can be seen from DE-A-2344694. In the blind-riveting assembly known from this document, the mandrel projects beyond the rivet flange in the usual way over a length which represents a multiple of the length of the rivet, and runs to a slender point. Behind this there is a bead formed on the mandrel, behind which the setting tool grips the stem and which partially absorbs the tensile forces exerted on the mandrel by the setting tool. In front of the bead, in the direction of the rivet head flange, the mandrel is roughened so as to increase the friction between its surface and the jaws of the setting tool, with the result that the tensile force exerted by the setting tool is absorbed firstly by the mandrel stem via its friction-increasing surface and secondly via the bead. According to the specification DE-A-2344694, the bead fulfils only the function of an additional safeguard, and does not absorb the full tensile force of the setting-tool all on its owl. The bead formed adjacent the pointed end of the mandrel makes it impossible to push the mandrel with the bead through the rivet when producing the blind-riveting assembly. The bead must therefore be initially shaped subsequent to the insertion of the mandrel in the rivet, which is technically difficult, particularly in view of the mandrel's pointed tip extending beyond the bead. In practice, therefore, the metal blind-riveting assemblies have been used with a smooth nail-like mandrel, upset at only one end to provide the rivet setting head, in which the length of the part projecting out of the rivet head flange represents a multiple of the,length of the rivet, in order to provide the pulling jaws of the setting tool with a sufficiently long application surface for transmitting the tensile force.

In addition to the above, there are also known solutions to the problem of applying the tensile force, which amount to providing ring grooves on the mandrel in the area of the part projecting from the rivet head flange, in such a manner that on this part of the mandrel there are no parts going beyond its stem diameter. When producing the blind-riveting assembly in question, a mandrel of this type can still be pushed into the rivet sleeve after forming the ring grooves. An example of this technical development is described in DE-B-1286337 with priority from 1964, which was followed by similar technical proposals in GB-A-1538872 with priority from 1975, and GB-A-2076493 with priority from 1980. This technical development shows that the specialist field has long had the idea of improving the blind-riveting assembly from the point of view of its gripping surface for the setting tool. Now it should be borne in mind with regard to the technique of ring grooves on the mandrel that ring grooves of this type may under certain circumstances degenerate into an unwanted breaking point below the predetermined tensile strength of the neck. The same risk also applies, moreover, to the above mentioned blind-riveting assembly commonly used today, which possesses a smooth-surfaced nail-like mandrel and which, precisely because of this smooth surface, has to be gripped with a high contact pressure by the setting tool on the part projecting from the rivet head flange. Setting tools are usually equipped with serrated jaws, and the serrations are frequently sharp edged, and, because of the high pressure they exert, occasionally produce notch marks on the mandrel which create breaking points where the tensile strength is below that of the neck, thus causing the mandrel to break in the wrong place, as a result of which the setting process is not reliably carried out.

It is the object of the present invention to provide an improved blind-riveting assembly of the kind with a pulling head on a break stem mandrel, which can be made in the known way involving subjecting a necked portion of the mandrel stem to axial pressure when upsetting the pulling head, but with minimal risk of interference with the configuration of the mandrel at the locality of its predetermined breaking point, even if, as known per se, this breaking point lies within the body portion of the rivet sleeve.

In accordance with the invention, the foregoing object is achieved by a blind-riveting assembly having the features defined in claim 1.

The foregoing design of the pulling head of the mandrel of an assembly in accordance with the invention means that a lower degree of deformation is required on the part of the material of the mandrel when upsetting the pulling head, because its end face is arch shaped in axial section, (i.e. the face is hemispherical, conical, pyramidal, frusto-conical or frusto-pyramidal, for example) terminating at a flat annular base where it joins the mandrel stem, or in other words reducing in transverse cross sectional area progressively from its annular base, than is the case with the aforementioned known blind rivets with their flat-topped substantially cylindrical pulling heads. This special shape of the pulling head of the mandrel of an assembly in accordance with the invention requires a correspondingly lower pressure in the course of shaping, especially since the specified contour, preferably rounded and most conveniently hemispherical, facilitates this shaping. It is thus possible to avoid adversely affecting the predetermined breaking point of the neck of the mandrel in terms of its position and properties, and it can therefore lie within the rivet where the adjacent parts of the mandrel itself are not given any particularly stable lateral support, such a support being precluded by the relative flexibility of the material of the rivet. Nor is the predetermined breaking point so loaded, by the pressure in the course of upsetting the pulling head, that its properties are thereby changed.

Preferably, the rivet-setting head of the mandrel of a blind riveting assembly in accordance with the invention, whether or not of the same size or shape as the pulling head, conforms to the same criteria of shape, for by designing as a flat annular base the transition from the rivet setting head to the mandrel stem, it is ensured that this annular base, during setting, initially clinches the rivet sleeve in the desired manner, in order to satisfactorily fill the respective openings of the parts being joined, whereupon the rivet-setting head, in the case where it is initially outside the rivet, as the respective tail end of the body portion of the rivet bulges, is partially drawl into the latter. This means that because of the flat annular base of the rivet-setting head, the adjacent part of the rivet sleeve partially closes again behind the setting head and thus holds the latter after the mandrel has broken.

Furthermore, the specified configuration of the pulling head of the mandrel of an assembly in accordance with the invention, namely its arch shaped outline in axial section, produces the effect of improving the sliding properties of the blind-riveting assembly when it is automatically fed into and through tubes or pipes, pulling head foremost. Moreover, if heads of the specified shape are at both ends of the mandrel of an open type blind-riveting assembly, both can serve as guide heads so that whichever is leading, the assembly has little tendency to catch anywhere in the guide duct. The shape of the pulling head of the mandrel of an assembly in accordance with the invention thus has a combined effect in both improving the reliability of manufacturing a product with predictable performance and improving the readiness with which it can be fed automatically. Such shape also facilitates inserting, automatically or by hand, the mandrel axially into a nose-piece and pulling device of a rivet-setting tool.

Because a mandrel with a pulling head can be pulled positively by a pulling device of a rivet-setting tool in engagement with the pulling head, rather than by engagement of clamping jaws of the tool which require a comparatively long area of contact to create sufficient friction to withstand the setting load, the mandrel of an assembly in accordance with the invention can be significantly shorter than the smooth nail-like mandrels of conventional blind rivets. In particular, the pulling head is separated from the rivet head flange by a distance corresponding at most to roughly the length of the rivet, that is to say of both the body portion and the head flange. This shortening of the mandrel entails firstly a considerable saving of material and secondly simplification of the removal of the broken-off part of the mandrel stem. This broken-off part of the mandrel stem has to be led away from the tool, and where this involves it passing through a passage in the tool through which there is a flow of air to assist such removal, the pulling head both counteracts jamming and offers the current of air a suitable surface (its annular base) for propelling it along the passage. In addition the relatively short blind rivet can be fed through guide ducts which change direction through correspondingly small radii.

There now follows a detailed description, to be read with reference to the accompanying drawings, of a blind riveting assembly in accordance with the invention and illustrative thereof. It will be realised that this illustrative assembly has been selected for description by way of example and not of limitation of the invention.

In the accompanying drawings:

Figure 1a represents the illustrative blind-riveting assembly in side view and partly in section;

Figure 1b represents a modification of a pulling head of the illustrative blind-riveting assembly;

Figure 2 shows the illustrative blind-riveting assembly of Figure 1 in perspective;

Figure 3 shows the illustrative blind-riveting assembly of Figure 1 after setting of the rivet sleeve; and

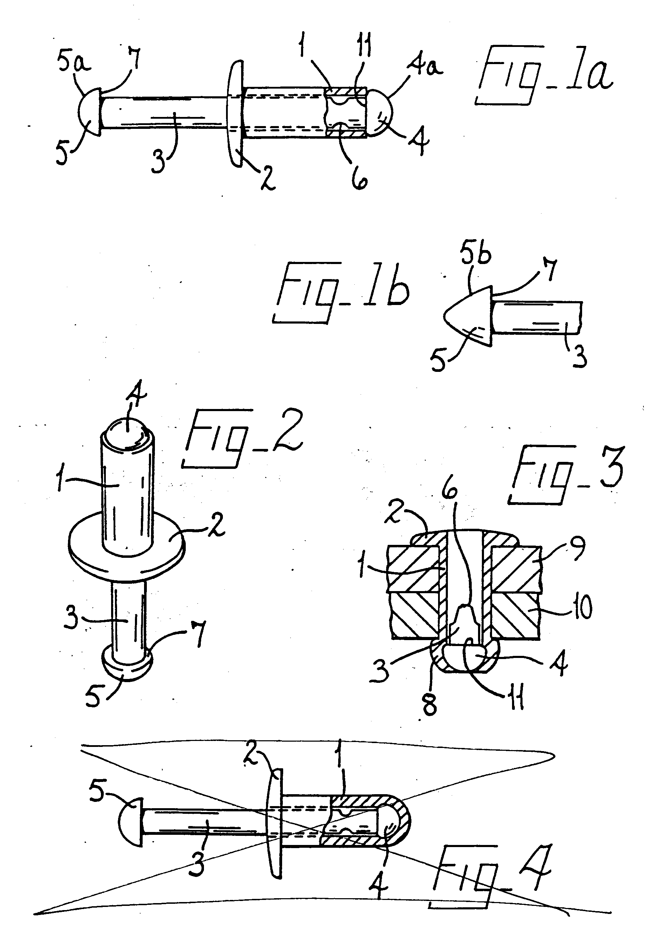

The metal blind-riveting assembly shown in Figure 1a consists of a tube-shaped rivet body portion or sleeve 1 with a rivet head flange 2 and a mandrel 3 with a rivet-setting head 4 upset at one end and a pulling head 5 upset at the other; the pulling head 5 has roughly the same diameter as the setting head. The pulling head 5 is arch-shaped in axial section, or more particularly, exhibits a semi-circular profile 5a. The mandrel 3 is provided with a predetermined breaking point or neck 6 where its stem is reduced in cross-section. The neck 6 lies within the rivet sleeve 1. The rivet and mandrel are both made of metal, the material of the mandrel exhibiting a higher strength than the material of the rivet. The pulling head 5 serves for engaging pulling means of a setting tool (see for example US-A-2183543.

As can be seen, the mandrel 3 is upset at both ends to form the rivet-setting head 4 likewise having a semi-cylindrical profile 4a and the end 5 serving as a pulling head. Both upset ends 4 and 5 undergo transition into the mandrel 3 with a flat annular base 11 or 7 normal to the axis of the mandrel and meeting the mandrel stem at a sharp corner. The base 7 thus forms a particularly favourable contact surface for the application of a setting tool, from which it cannot slip even if considerable tensile force is applied. The distance between the rivet flange 2 and the pulling head 5 is here roughly equal to the length of the rivet; thus the blind-riveting assembly shown in Figure 1 is overall considerably shorter than the above mentioned usual commercial blind-riveting assemblies with smooth nail-like mandrels, insofar as the mandrel 3 does not project so far out of the rivet flange 2 as is customary.

The pulling head of the mandrel of the illustrative assembly has been shown in Figure 1a as hemispherical at its end face 5a with a flat annular base 5. The mandrel of an assembly in accordance with the invention may have a pulling head with other arched shapes as viewed in longitudinal section, and in particular may be conical or frusto-conical as depicted in Figure 1b, or may be at least part pyramidal; in either case, it is preferably rounded, at least at its tip, and the flat annular base is retailed. It is not essential that the rivet-setting head 4 is of the same size or configuration as the head 5, the head 4 serving a different function and being designed with its intended purpose in mind. As shown in Figure 1a, a setting head 4 with a similar shape to the head 5 may be preferred, with a flat annular base 11 and an end face correspondingly arch shaped (e.g. curved or tapering) in longitudinal cross section.

In the two cases shown in Figures 1a and 1b, therefore, the upset ends 4 and 5 of the mandrel have a profile reducing in cross section from a flat base in a plane normal to the mandrel axis.

Figure 2 represents the metal blind-riveting assembly according to Figure 1a in a perspective view. This clearly shows the base 7 which runs radially to the mandrel 3, and forms the flat engagement surface for a setting tool.

Figure 3 shows the blind-riveting assembly of Figure 2 in longitudinal section after setting of the rivet. Here the rivet sleeve 1 connects two plate-like components 9 and 10, by means of the rivet flange 2 and the counter head 8, which is formed by widening the rivet sleeve by means of the setting head 4 in the known way. In this method the setting head 4, by virtue of its flat base, is partially surrounded by the counter head 8, so that it cannot fall out of the latter. Inside the rivet sleeve 1, the mandrel 3 ends where it has broken at the neck 6.

## Claims

1. A metal blind-riveting assembly comprising an open ended rivet having a tubular body portion (1) with a head flange (2) at one end and an axial bore, and a mandrel having a stem of uniform cross-section with a neck (6) of reduced cross section at which the stem will break at a predetermined tension,

the mandrel being upset at both ends to provide two heads larger than the bore of the rivet, one of which forms a rivet setting head (4) which engages the tail end of the rivet while the other is a pulling head (5) having a flat annular base (7) facing the mandrel stem for engagement by pulling means of a rivet setting tool characterized in that the break neck (6) lies within the body portion (11) of the rivet, and the pulling head (5) of the mandrel (3) has an end face (5a) which is arch shaped in axial section and terminates at the flat angular base (7).

2. An assembly according to claim 1 further characterised in that the annular base (7) joins the mandrel stem at a sharp corner.

3. An assembly according to claim 1 further characterised in that the end face (5a) of the pulling head (5) of the mandrel (3) is hemispherical.

4. An assembly according to claim 1 further characterised in that the end face (5a) of the pulling head (5) of the mandrel (3) is a truncated cone or pyramid.

5. An assembly according to claim 1 further characterised in that the setting head (4) of the mandrel also has an end face (4a) which is arch shaped in cross section.

6. An assembly according to claim 1 further characterised in that the pulling head (5) of the mandrel (3) is spaced from the rivet head flange (2) by a distance corresponding at most to roughly the length of the rivet.

**Patentansprüche**

1. Blindnietanordnung aus Metall mit einem Niet, dessen Ende offen ist, mit einem rohrförmigen Körperabschnitt (1) mit einem Kopfflansch (2) an einem Ende und einer Axialbohrung, und mit einem Dorn dessen Schaft einen gleichmäßigen Querschnitt sowie einen Hals (6) reduzierten Querschnitts aufweist, an welchen der Schaft Hals (6) reduzierten Querschnitts aufweist, an welchem der Schaft bei ein bestimmten Zugkraft bricht, wobei der Dorn an beiden Enden angestaucht ist, um zwei Köpfe zu schaffen, die größer als die Bohrung des Niets ist, wobei einer einen Nietsetzkopf (4) bildet, der das Schwanzende des Niets ergreift, während der andere Kopf ein Ziehkopf (5) mit einem flachen ringförmigen Boden (7) ist, welcher zum Dornschaft weist und von einer Zieheinrichtung eines Nietsetzwerkzeuges ergreifbar ist, **dadurch gekennzeichnet,** daß der Hals (6) innerhalb des Körperabschnitts (11) des Niets vorgesehen ist, und daß der Ziehkopf (5) des Dorns (3) eine Endfläche (5a) aufweist die im Axialschnitt gewölbt ausgebildet ist und an dem flachen ringförmigen Boden (7) endet.

2. Blindnietanordnung nach Anspruch 1, dadurch gekennzeichnet, daß der ringförmige Boden (7) mit dem Dornschaft über eine scharfe Ecke verbunden ist.

3. Blindnietanordnung nach Anspruch 1, dadurch gekennzeichnet, daß die Endfläche (5a) des Ziehkopfes (5) des Dorns (3) halbkugelförmig ausgebildet ist.

4. Blindnietanordnung nach Anspruch 1, dadurch gekennzeichnet, daß die Endfläche (5a) des Ziehkopfes (5) des Dorns (3) ein Kegelstumpf oder eine Pyramide ist.

5. Blindnietanordnung nach Anspruch 1, dadurch gekennzeichnet, daß der Setzkopf (4) des Dorns ebenfalls eine Endfläche (4a) aufweist, welche im Querschnitt bogenförmig ausgebildet ist.

6. Blindnietanordnung nach Anspruch 1, dadurch gekennzeichnet, daß der Ziehkopf (5) des Dorns (3) von dem Nietkopfflansch (2) in einem Abstand angeordnet ist, welcher im wesentlichen der Länge des Niets entspricht.

**Revendications**

1. Ensemble de rivetage métallique à rivet aveugle, comprenant un rivet à extrémité ouverte, qui possède une partie corps tubulaire (1) munie d'une collerette de tête (2) à une extrémité et un alésage axial, et un mandrin possédant une tige ayant une section uniforme qui est munie d'un étranglement (6) de section réduite, au droit duquel la tige se brise sous une tension prédéterminée, le mandrin étant refoulé à ses deux extrémités pour fournir deux têtes plus grandes que l'alésage du rivet, l'une de ces extrémités formant la tête de rivetage qui est en contact avec l'extrémité de queue du rivet, tandis que l'autre est une tête de traction (5) qui possède une base annulaire plate (7) faisant face à la tige du mandrin et destinée à être attaquée par des moyens de traction de l'outil de rivetage, caractérisé en ce que l'étranglement (6) est situé dans la partie formant corps du rivet, la tête de traction (5) du mandrin (3) ayant une face d'extrémité (5a) qui est d'une forme bombée en coupe axiale et se termine au niveau de la base annulaire plate (7).

2. Ensemble selon la revendication 1, caractérisé en outre en ce que la base annulaire (7) rejoint la tige du mandrin en formant un angle vif.

3. Ensemble selon la revendication 1, caractérisé en outre en ce que la face d'extrémité (5a) de la tête de traction (5) du mandrin (3) est hémisphérique.

4. Ensemble selon la revendication 1, caractérisé en outre en ce que la face d'extrémité (5a) de la tête de traction (5) du mandrin (3) est un tronc de cône ou de pyramide.

5. Ensemble selon la revendication 1, caractérisé en outre en ce que la tête de rivetage (4) du mandrin possède elle aussi une face d'extrémité (4a) qui est d'une forme bombée en coupe axiale.

6. Ensemble selon la revendication 1, caractérisé en outre en ce que la tête (5) du mandrin (3) est espacée de la collerette de tête (2) du rivet d'une distance qui correspond au maximum à peu près à la longueur du rivet.

Fig_1a

Fig_1b

Fig_2

Fig_3

Fig_4